Europäisches Patentamt

European Patent Office

Office européen des brevets

(11) Veröffentlichungsnummer: **0 179 252**
**A2**

# (12) EUROPÄISCHE PATENTANMELDUNG

(21) Anmeldenummer: 85111535.2

(22) Anmeldetag: 12.09.85

(51) Int. Cl.⁴: **F16P 3/12**

(30) Priorität: 14.09.84 DE 3433821

(43) Veröffentlichungstag der Anmeldung:
30.04.86 Patentblatt 86/18

(84) Benannte Vertragsstaaten:
AT BE DE FR GB IT NL SE

(71) Anmelder: **Siemens Aktiengesellschaft**
**Berlin und München Wittelsbacherplatz 2**
**D-8000 München 2(DE)**

(72) Erfinder: **Rösch, Hansjörg, Dipl.-Ing.**
**Am Kirchsteig 2**
**D-8911 Hofstetten(DE)**
Erfinder: **Sodeikat, Heinz, Dipl.-Ing.**
**Tizianstrasse 119**
**D-8000 München 19(DE)**

(54) **Verfahren und Einrichtung zum Schutz von Personen, die sich im Aktionsbereich eines beweglichen Maschinenteils einer verfahr- oder verschwenkbaren Arbeitsmaschine, insbesondere eines Industrieroboters, aufhalten.**

(57) Verfahren und Einrichtung zum Schutz von Personen, die sich im Aktionsbereich beweglicher Maschinenteile von verfahr- oder verschwenkbaren Arbeitsmaschinen, insbesondere von Industrierobotern aufhalten, wobei bei Unterschreiten eines vorgegebenen Sicherheitsabstandes zwischen den beweglichen Maschinenteilen und der Person ein Warnsignal abgegeben wird und/oder die Arbeitsbewegung der Arbeitsmaschine unterbrochen wird. Entsprechend der programmierten Bewegungsabläufe der Arbeitsmaschine ist eine Farbfernsehkamera zur Beobachtung der Arbeitsmaschine und der Person angeordnet. Die beweglichen Maschinenteile weisen eine der Grundfarbe der Farbfernsehkamera und wesentliche Teile der Arbeitskleidung der Person eine der beiden anderen Grundfarben der Farbfernsehkamera. Zur Auswertung der Videofarbsignale ist das Fernsehbild mit koordinatenförmig angeordneten Rasterfeldern unterlegt. Dabei wird jeweils der Abstand zwischen den Rasterfeldern unterschiedlicher Videofarbsignale ermittelt und bei Unterschreitung eines vorgegebenen Rasterfeldabstandes ein Steuersignal zur Erzeugung des Warnsignals oder zur Abschaltung der Arbeitsmaschine abgegeben.

FIG 1

## Verfahren und Einrichtung zum Schutz von Personen, die sich im Aktionsbereich eines beweglichen Maschinenteils einer verfahr- oder verschwenkbaren Arbeitsmaschine, insbesondere eines Industrieroboters, aufhalten

Die Erfindung bezieht sich auf ein Verfahren zum Schutz von Personen, die sich im Aktionsbereich eines beweglichen Maschinenteils einer verfahr- oder verschwenkbaren Arbeitsmaschine, insbesondere eines Industrieroboters, aufhalten, wobei bei Unterschreiten eines vorgegebenen Sicherheitsabstandes zwischen den beweglichen Maschinenteilen und der Person ein Warnsignal abgegeben wird und/oder die Arbeitsbewegung der Arbeitsmaschine unterbrochen wird. Ferner bezieht sich die Erfindung auf eine Einrichtung zur Durchführung des Verfahrens.

In der industriellen Fertigung werden in zunehmendem Maße programmgesteuerte Arbeitsmaschinen, insbesondere Industrieroboter eingesetzt. Insbesondere in Fertigungsstraßen, wie sie beispielsweise aus der Automobilindustrie bekannt sind, werden eine Vielzahl automatisch arbeitender Industrieroboter eingesetzt, die in einem genauen Zeittakt fließbandmäßig arbeiten. Bei derartig arbeitenden Arbeitsmaschinen sind selbstverständlich Sicherheitsvorkehrungen zum Schutz von Personen getroffen. So führt ein unbefugtes Betreten des Arbeitsbereichs der Arbeitsmaschine in der Fertigungsstraße zum Abschalten der Arbeitsmaschinen, weil dieser Bereich durch Außenschranken überwacht ist.

Für Inspektions- und Reperaturarbeiten werden im allgemeinen die Arbeitsmaschinen einer Fertigungsstraße abgeschaltet. Manchmal sind jedoch während des Arbeitsablaufs geringfügige Wartungsarbeiten an einzelnen Arbeitsmaschinen notwendig, die nicht unbedingt das Abschalten der gesamten Fertigungsstraße erfordern. Es soll dabei auch vermieden werden, daß eine einzige Arbeitsmaschine abgeschaltet wird, weil dann der Arbeitstakt einer Fertigungsstraße gestört ist und die Einzelabschaltung letztlich einer Abschaltung der gesamten Fertigungsstraße gleichkommt. Um solche Wartungsarbeiten an Arbeitsmaschinen, die sich in Betriebsstellung befinden und daher Arbeitsbewegungen ausführen, durchführen zu können, müssen besondere Maßnahmen zum Schutz der Bedien- und Wartungspersonen vorgesehen werden.

Aus der DE-OS 3208901 ist ein Verfahren zur Verhinderung von Unfällen zwischen einer verfahrbaren Arbeitsmaschine, z.B. Kran, Transporteinrichtung oder ähnliches, und einer oder mehreren sich in ihrem Bewegungsbereich befindenden Person bzw. befindenden Personen bekannt. Das bekannte Verfahren sieht vor, die betreffende Person mit Sendern auszurüsten und an der Arbeitsmaschine einen oder mehrere Empfänger anzubringen, die die ausgesandten Signale empfangen. Dabei ist es jedoch recht schwierig, definierte Sicherheitsabstände zwischen dem Sender und dem Empfänger einzuhalten, um ein sicheres Ansprechen zu gewährleisten. Bei Funkempfängern können Funkstörungen auftreten, die ein ungewolltes oder ein zu spätes Abschalten der Arbeitsmaschine verursachen. Die batteriebetriebenen Sender können in der Sendeleistung nachlassen, so daß ohne weiteres der Sicherheitsabstand unterschritten werden kann, weil kein hinreichend starkes Sendesignal empfangen wurde.

Aufgabe der Erfindung ist es, ein Verfahren der eingangs geschilderten Art und eine Einrichtung hierfür zum Schutz von Personen anzugeben, mit dem eine zuverlässige Überwachung des Sicherheitsabstandes möglich ist.

Diese Aufgabe wird erfindungsgemäß bei einem oben beschriebenen Verfahren dadurch gelöst, daß entsprechend den programmierten Bewegungsabläufen der Arbeitsmaschine zumindest eine Farbfernsehkamera zur Beobachtung der Arbeitsmaschine und der Person angeordnet ist, daß das bewegliche Maschinenteil eine der Grundfarben der Farbfernsehkamera und wesentliche Teile der Arbeitskleidung der Person eine der beiden anderen Grundfarben der Farbfernsehkamera aufweisen, daß zur Auswertung der Videofarbsignale das Fernsehbild mit koordinatenförmig angeordneten Rasterfeldern unterlegt bzw. in solche gegliedert ist und jeweils der Abstand zwischen den Rasterfeldern unterschiedlicher Videofarbsignale ermittelt wird, und daß bei Unterschreitung eines vorgegebenen Rasterfeldabstandes ein Steuersignal zur Erzeugung des Warnsignals oder zur Abschaltung der Arbeitsmaschine abgegeben wird. Bezüglich der Einrichtung wird die Aufgabe mit den Merkmalen der Ansprüche 10 bis 12 gelöst.

Mit dem erfindungsgemäßen Verfahren ist es möglich, mit einer oder mit mehreren Farbfernsehkameras den Bewegungsbereich der Arbeitsmaschine zu überwachen. Dabei ist mindestens der bewegliche Maschinenteil der Arbeitsmaschine in einer der drei bekannten Grundfarben, z.B. grün, der Fernsehkamera gestrichen. Die Arbeitskleidung inklusive des Schutzhelms der Person, die an der in Aktion befindlichen Arbeitsmaschine zu hantieren hat, ist in einer der anderen beiden Grundfarben, z.B. rot, gehalten. Lediglich der Teil der Arbeitskleidung, z.B. Arbeitshandschuhe oder Teile der Arbeitskleidung am Unterarm, weisen diese Schutzfarbe nicht auf, damit ein unmittelbares Annähern an die Arbeitsmaschine möglich ist. Das Fernsehbild wird mit koordinatenförmig angeordneten Rasterfeldern unterlegt oder ist in solche Rasterfelder aufgeteilt. Befinden sich Videofarbsignale in den Rasterfeldern des Koordinatenrasters, so werden die Abstände in horizontaler und vertikaler Richtung zur anderen Kriterienfarbe der anderen Rasterfelder ermittelt. Wird ein vorgegebener Sicherheitsabstand zwischen zwei unterschiedlichen Rasterfeldfarben unterschritten, so wird ein Steuersignal erzeugt, das zur Abgabe eines Warnsignals oder zur Abschaltung der Arbeitsmaschine führt.

Das erfindungsgemäße Verfahren hat den Vorteil, daß an einer arbeitenden Arbeitsmaschine das Wartungspersonal hantieren kann ohne daß die Arbeitsmaschine vorher abgeschaltet werden muß und dabei dennoch die Sicherheit für ein Warnsignal oder eine Abschaltung der Maschine gegeben ist, wenn beispielsweise der Roboterarm sich zu dicht an die betreffende Person bewegt. Dann wird zur Sicherheit der dort befindlichen Person die Arbeitsmaschine zwangsweise abgeschaltet. Dabei kann die Größe des Sicherheitsabstandes zwischen den einzelnen verschiedenfarbigen Rasterfeldern entsprechend dem Abstand Mensch-Maschine in Abhängigkeit der Trägheit der Maschine gewählt werden.

In einer vorteilhaften Ausgestaltung werden bei dem erfindungsgemäßen Verfahren die Rasterfelder von dem normalen Fernsehraster gebildet. Dabei wird der räumliche Rasterfeldabstand aus dem zeitlichen Abstand zwischen jeweils zwei unterschiedlichen Videofarbsignalen ermittelt. Dies hat den Vorteil, daß kein großer Bildspeicher notwendig ist. Es ist lediglich eine Zeitmessung zwischen zwei unterschiedlich auftretenden Farbsignalen notwendig und dies sowohl in der Horizontalen, als auch in der Vertikalen.

Bei der gegebenen Fernsehnorm wird erfindungsgemäß zur Bildung des horizontalen Rasterfeldabstands zweckmäßigerweise innerhalb jeder Fernsehzeile die Zeit zwischen zwei unterschiedlichen Videofarbsignalen, z.B. dem Rot- und dem Grünsignal, ermittelt. Bei Unterschreitung einer vorgegebenen Zeitspanne wird das Steuersignal abgegeben, das entweder ein Warnsignal oder das Abschalten der Arbeitsmaschine bewirkt. Zur Bildung des vertikalen Rasterfeldabstandes wird die Anzahl der Fernsehbildzeilen zwischen zwei unterschiedlichen Videofarbsignalen ermittelt. Auch hier wird bei Unterschreitung einer vorgegebenen Anzahl das Steuersignal abgegeben. Bei dem erfindungsgemäßen Verfahren ist es dabei vorteilhaft, den zeitlichen Abstand zwischen zwei unterschiedlichen Videofarbsignalen mit einem vorwählbaren Zähler zu ermitteln, der mit einem Zählertakt beaufschlagt ist, der von der Zeilenfrequenz abgeleitet wird. Dabei wird der Zähler mit dem Ende des einen Farbsignals gestartet. Erscheint vor Erreichen der eingestellten Zahl des vorwählbaren Zählers ein Videosignal der anderen Farbe, so wird eine Steuereinrichtung angesteuert, um das Steuersignal zu erzeugen. Dabei ist es zweckmäßig, den Beginn des anderen Farbsignals, also die Vorderflanke, heranzuziehen.

In einer zweckmäßigen Weiterbildung der Erfindung kann zusätzlich zur Videoüberwachung mit einer zeitlichen Vorgabe vor jeder Bewegung eines beweglichen Maschinenteils ein akustisches Warnsignal abgegeben werden, sofern sich im Aktionsbereich der Arbeitsmaschine eine Person befindet. Dabei können für unterschiedliche Bewegungsrichtungen der bewegten Maschinenteile unterschiedliche Tonsignale, beispielsweise in unterschiedlicher Tonhöhe,abgegeben werden.

Um die Sicherheit zusätzlich zu erhöhen und das Ausfallrisiko der Überwachungskamera zu verringern, kann bei dem erfindungsgemäßen Verfahren im Erfassungsbereich der Farbfernsehkamera, jedoch nicht im Bewegungsbereich der Arbeitsmaschine, eine Farbmarkierung zusätzlich angeordnet werden, die die Farbe der Arbeitskleidung aufweist. Diese Farbmarkierung dient zur Erzeugung eines Testsignals, mit dem eine einwandfreie Kamerafunktion überwacht werden kann. Zusätzlich können Maßnahmen getroffen werden, die die Videosignale erst bei Überschreiten eines vorgegebenen Schwellenwertes auswerten.

In vorteilhafter Weise ist es mit dem erfindungsgemäßen Verfahren möglich, die Videosignale zusätzlich an eine Leitzentrale zu übertragen, in der die Abläufe der Arbeitsmaschine beobachtet werden können.

In einer Weiterbildung der Erfindung wird ein Steuersignal nur abgegeben, wenn eine außerhalb des Aktionsbereichs der Arbeitsmaschine angeordnete Sicherheitsschranke durchschritten wurde und wenn die Arbeitsmaschine in Bewegung ist.

Zur Durchführung des erfindungsgemäßen Verfahrens ist eine Einrichtung vorgesehen, die der Farbfernsehkamera nachgeschaltet ist und das Fernsehbild in koordinatenförmige Rasterfelder gliedert. Dabei wird mit einer Differenzbildungs- und Auswerteeinrichtung der Rasterfeldabstand sowohl in der Horizontalen als auch in der Vertikalen ermittelt. Der Differenzbildungs- und Auswerteeinrichtung ist eine Steuerlogik nachgeschaltet, die einen Maschinenservo der Arbeitsmaschine beaufschlagt. Bei Unterschreitung eines vorgegebenen Rasterfeldabstandes wird entweder ein Warnsignal abgegeben oder die Arbeitsmaschine abgeschaltet.

Eine zweckmäßige Einrichtung zur Auswertung der Videofarbsignale ist durch vier gleichartig aufgebaute, verhältnismäßig einfach gestaltete Baugruppen gebildet, die der Farbfernsehkamera nachgeschaltet sind. Dabei weist jede Baugruppe einen Rückflankendetektor auf, der mit einem Videofarbsignal, z.B. rot, beaufschlagt ist. Ferner weist die Baugruppe einen Vorderflankendetektor auf, der mit der anderen Farbe des Videosignals, z.B. grün, beaufschlagt ist. Der Rückflankendetektor ist über ein erstes Verknüpfungsglied mit einem programmierbaren Zähler verbunden. Zum Takten des programmierbaren Zählers ist ein Zähltakt an den zweiten Eingang des ersten Verknüpfungsgliedes geführt. Dabei wird der Zähltakt zweckmäßigerweise von der Zeilenfrequenz abgeleitet. Dem programmierbaren Zähler und damit der Baugruppe ist eine Schaltstufe nachgeschaltet, die das Steuersignal bei Unterschreitung des (zeitlichen) Abstandes zwischen zwei unterschiedlichen Farbsignalen abgibt. Für die Ermittlung des zeitlichen Abstands in der Horizontalen zwischen zwei unterschiedlichen Farbsignalen sind zwei gleiche Baugruppen vorgesehen, die mit einem ersten Zähltakt beaufschlagt sind, der durch die Teilung des Zeilentakts gebildet ist. Beträgt beispielsweise der Zeilentakt 64 µsec., so kann für das kleinste Zeitinkrement eine Mikrosekunde gewählt werden. Zwei gleiche Baugruppen sind deshalb vorgesehen, damit sowohl ein Wechsel vom Rot- zum Grünsignal als auch umgekehrt ein Wechsel vom Grün- zum Rotsignal exakt bestimmt werden kann, in Abhängigkeit von der Rückflanke des ersten Signals bis zur Vorderflanke des zweiten Signals. Zur Ermittlung des zeitlichen Abstandes in der Vertikalen sind ebenfalls zwei gleichartige Baugruppen vorgesehen, deren Zähler jedoch mit einem zweiten Zählertakt beaufschlagt sind. Dabei ist die kleinste zeitliche Differenz ein Zeilenabstand. Demzufolge entspricht der Zähltakt hier dem Zeilentakt. Auch hier ist beispielsweise das Rotsignal einmal auf den Rückflankendetektor und zum anderen auf den Vorderflankendetektor der anderen Baugruppe und umgekehrt geführt. Mit dieser erfindungsgemäßen Anordnung ist es auf verhältnismäßig einfache Weise mit relativ preisgünstigen Bauelementen möglich, den zeitlichen Abstand zwischen unterschiedlichen Farbsignalen zu messen und bei Unterschreitung ein entsprechendes Steuersignal zu erzeugen.

In einer zweckmäßigen Weiterbildung der Erfindung können zwei Steuersignale erzeugt werden, so daß in zwei Stufen Sicherheitsvorkehrungen getroffen werden können. In einer ersten Stufe wird ein Warnsignal erzeugt, in einer zweiten Stufe wird der Roboter abgeschaltet. Dazu ist innerhalb jeder Baugruppe dem programmierten Zähler ein zweiter programmierter Zähler parallelgeschaltet, der gegenüber dem ersten Zähler einen niederen Zählerstand aufweist. Der Ausgang des zweiten Zählers ist auf ein weiteres Verknüpfungsglied geführt, das zusätzlich vom anderen Farbsignal beaufschlagt ist. Der Ausgang des dritten Verknüpfungsgliedes führt auf eine zweite Schaltstufe, die in diesem Fall die Abschaltung der Arbeitsmaschine bewirkt.

Anhand der Zeichnung wird die Erfindung erläutert. Dabei zeigen

Fig. 1 eine schematische Darstellung einer Arbeitsmaschine und einer Person innerhalb eines Sicherheitsbereiches,

Fig. 2 ein Blockschaltbild für eine Bewegungswarnung und

Fig. 3 ein Blockschaltbild zur Bildung eines Kriteriums für die Unterschreitung des Sicherheitsabstandes,

Fig. 4 ein Blockschaltbild zur Schwellenwertbildung, und

Fig. 5 und 6 Blockschaltbildbilder zur Ermittlung der zeitlichen Abstände.

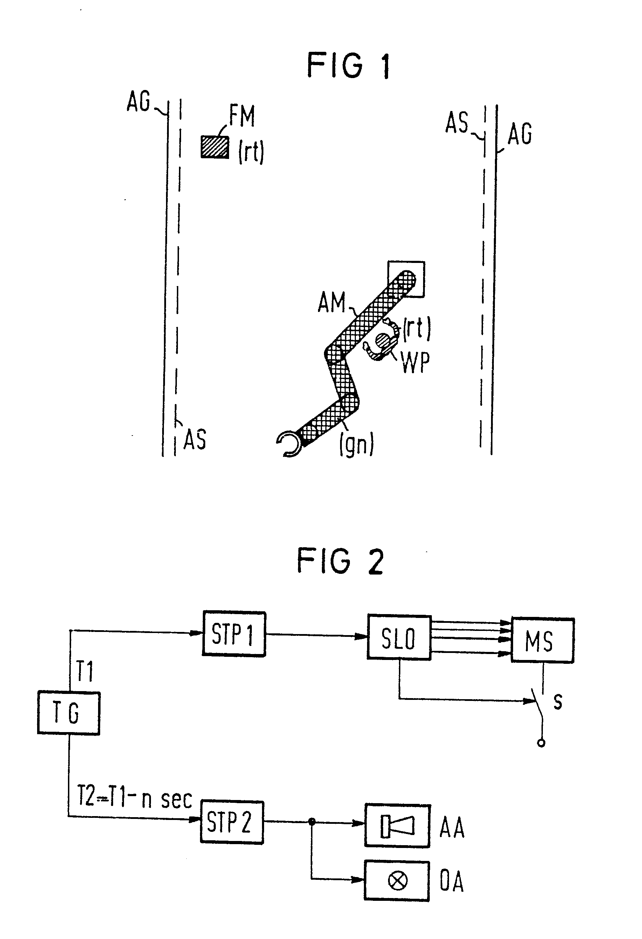

Im Sicherheitsbereich SB, der Teil einer Fertigungsstraße sein kann, befindet sich die Arbeitsmaschine AM, beispielsweise ein Industrieroboter, dessen Bewegungsarm in einer der drei Grundfarben der Fernsehkamera z.B. grün (gn) gestrichen ist. Dies ist in Fig. 1 gezeigt. In unmittelbarer Nähe des Bewegungsarms befindet sich eine Wartungsperson WP, deren Schutzanzug in einer anderen Grundfarbe der Fernsehkamera, z.B. rot (rt), gehalten ist. Ferner ist innerhalb des Erfassungsbereichs der Fernsehkamera, jedoch außerhalb des Bewegungsbereichs des Industrieroboters, eine Farbmarkierung FM ebenfalls in rot (rt) angebracht. Die Fernsehkamera ist hier über dem Industrieroboter (AM) angebracht und beobachtet den Aktionsbereich des Roboters. Es können auch mehrere Fernsehkameras mit unterschiedlichen Blickwinkeln vorgesehen sein, die jeweils für sich oder auch in Kombination miteinander Kriterien bilden, um eine Unterschreitung des Sicherheitsabstandes zu erkennen. Der Sicherheitsbereich ist im allgemeinen vom übrigen Bereich mit mechanischen Mitteln AG abgetrennt. Zusätzlich können ein oder mehrere elektrisch überwachte Außenschranken AS vorgesehen sein, die innerhalb der mechanischen Abgrenzung AG angeordnet sind und bei Durchschreiten ein Warnsignal abgeben.

In Fig. 2 ist schematisch dargestellt, wie eine Bewegungswarnung abgegeben werden kann. Um eine Bewegungswarnung vor der jeweiligen Bewegung des Maschinenteils zu erzeugen, wird mit einer zeitlichen Vorgabe vor jeder Bewegung ein Warnsignal abgegeben. Dazu kann ein Taktgenerator TG, der das Steuerprogramm STP der Arbeitsmaschine taktet, mit einer zeitlichen Vorgabe von T2 = T1 - n sec ein zusätzlich vorhandenes, identisches Steuerprogramm STP2 takten, das vor jeder Bewegung einen akustischen AA oder optischen OA Alarm abgibt. Das Steuerprogramm STP1 der Arbeitsmaschine steuert die Steuerlogik SLO, diese wiederum den Maschinenservo MS der Arbeitsmaschine. Selbstverständlich kann auch mit nur einem Steuerprogramm gearbeitet werden, das die jeweiligen Steuerbefehle zeitverzögert an die Steuerlogik gibt.

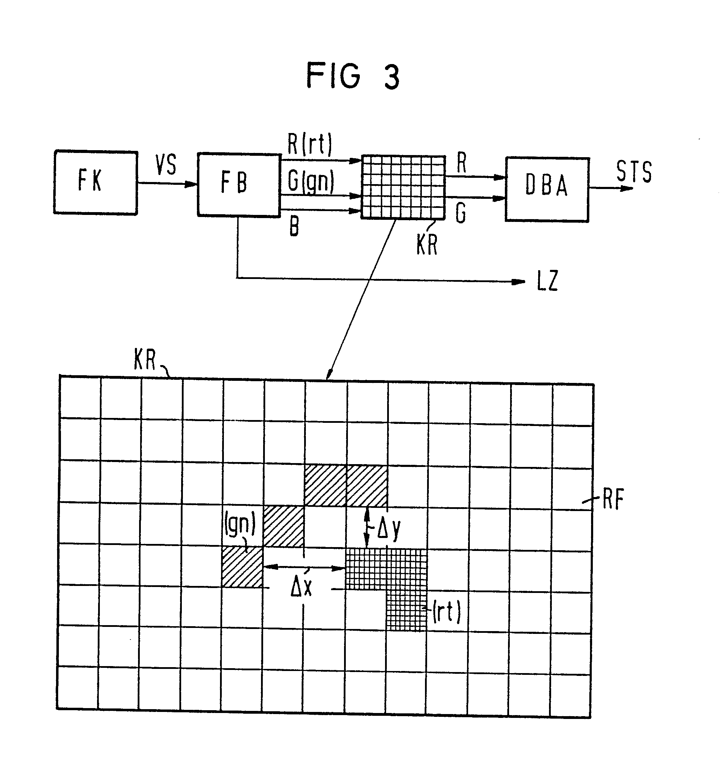

Fig. 3 zeigt eine Farbfernsehkamera FK, die die Videosignale VS und ein entsprechendes Fernsehbild FB erzeugt, das zusätzlich zu einer Leitzentrale LZ übertragen werden kann. Das Fernsehbild FB wird mit einem Koordinatenraster KR unterlegt. Die dadurch gebildeten Rasterfelder RF werden mit einer Differenzbildungs- und Auswerteeinrichtung DBA überwacht, wobei die Abstände $\Delta$ x und $\Delta$ y zwischen den Rasterfeldern RF mit unterschiedlichen Farbsignalen (gn) und (rt) sowohl in Horizontal- als auch in Vertikalrichtung gemessen werden. Wird der Sicherheitsabstand $\Delta$ x und / oder $\Delta$ y, der voreingestellt wird, unterschritten, so wird ein Steuersignal STS abgegeben, um über die Steuerlogik (SLO) die Maschine bzw. den Maschinenservo (MS) der Arbeitsmaschine (AM) abzuschalten.

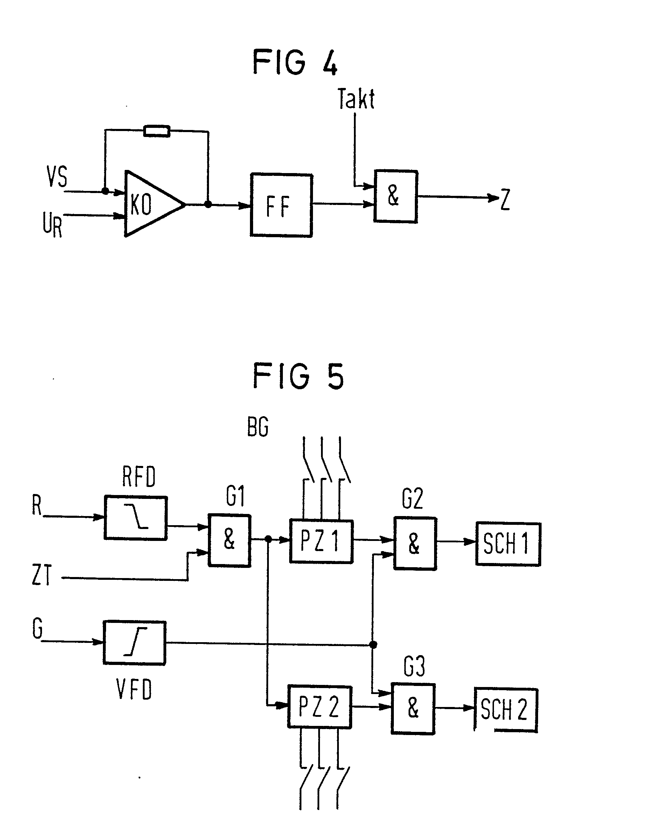

Um eine sichere Funktion des erfindungsgemäßen Verfahrens zu gewährleisten, werden nur eindeutige Videofarbsignale verarbeitet. Dazu werden die Farbsignale erst ab einem gewissen Schwellenwert verarbeitet. Fig. 4 zeigt einen möglichen Schwellenwertschalter. Das Videosignal VS wird einem Differentialverstärker KO zugeführt, an dem eine Referenzspannung UR liegt. Der Ausgang des Differentialverstärkers führt auf ein Flip-Flop FF. Von da gelangt das Videosignal über ein UND-Glied an einen Zähler. Das UND-Glied ist zusätzlich von einem Takt beaufschlagt. Der Zähler Z, der zur zeitlichen Erfassung der unterschiedlichen Videosignale vorgesehen ist, wird weiter unten noch erläutert.

Zur Erhöhung der Sicherheit wird die Kamera auf einwandfreie Funktion hin periodisch überprüft. Dabei können Kriterien für eine einwandfreie Kamerafunktion Mindestsignalgrößen an den roten, gelben und blauen Farbvideoausgängen der Fernsehkamera sein. Eine bessere Kamerafunktionsprüfung ergibt sich mit der Bildung eines Testsignals, das von einer Farbmarkierung FM, wie oben schon erwähnt, abgeleitet wird und in der Farbe des Schutzanzuges der Wartungsperson gehalten ist, wobei ein ständiger Vergleich auf das Vorhandensein dieses Farbsignals durchgeführt wird und bei einer Kamerastörung ein Störalarmsignal erzeugt wird. Wird nur eine Arbeitsmaschine überwacht, so kann das Störungssignal zum Abschalten des Roboters führen. Bei Fertigungsstraßen hingegen, wo eine Vielzahl von Robotern im genauen Zeittakt arbeiten, wird man dieses Störungsalarmsignal für eine akustische Anzeige heranziehen, um die im Arbeitsbereich des Roboters befindliche Person zu warnen, daß das Sicherungssystem ausgefallen ist.

Dabei ist eine Rückstellung des Störungsalarmsignals nur möglich, wenn die betreffende Person außerhalb des Gefahrenbereichs ist. Um Fehlalarme durch die Farben der Umgebung zu vermeiden, kann der Erfassungsbereich der Kamera dem Bewegungsbereich der Arbeitsmaschine gleichgesetzt sein. Damit wird eine Reduzierung der Umgebung erreicht. Ferner wird man den Farbton der Grundfarben für die Arbeitsmaschine und den Schutzanzug der Person so wählen, daß die Kamera jeweils ein maximales Signal abgibt. Zudem werden diese Farbsignale erst ab einem gewissen Schwellenwert, der über dem Schwellenwert des Testsignals liegt, ausgewertet.

Ein zweckmäßige Einrichtung zur Durchführung des erfindungsgemäßen Verfahrens zeigt Figur 5. Hier ist im Blockschaltbild eine Baugruppe BG gezeigt, die einen Rückflankendetektor RFD, der mit dem Farbsignal Rot R und einem Vorderflankendetektor VFD, der mit dem Farbsignal Grün G beaufschlagt ist, aufweist. Der Ausgang des Rückflankendetektors führt auf ein erstes logisches Verknüpfungsglied G1, das zusätzlich mit dem Zähltakt ZT beaufschlagt ist. Der Ausgang des Verknüpfungsgliedes G1 führt auf einen ersten programmierbaren Zähler PZ1 und auf einen zweiten programmierbaren Zähler PZ2. Jedem Zähler, PZ1 und PZ2 ist jeweils ein Verknüpfungsglied G2 und G3 nachgeschaltet. Jedes dieser beiden Verknüpfungsglieder G2 und G3 ist jeweils mit dem Ausgang des Vorderflankendetektors verbunden. Ist aufgrund des ersten programmierten Zählers, der höher eingestellt ist als der zweite programmierte Zähler, der Sicherheitsabstand, d.h. der zeitliche Abstand zwischen zwei unterschiedlichen Farben, unterschritten, so gelangt über den Ausgang des zweiten Verknüpfungsgliedes G2 ein Signal an eine Schaltstufe Sch1, die ein Warnsignal bewirkt. Wird der Sicherheitsabstand noch weiter unterschritten, so gelangt vom Ausgang des dritten Verknüpfungsgliedes G3 ein Signal an die zweite Schaltstufe Sch2, die das Abschalten des Roboters bewirkt.

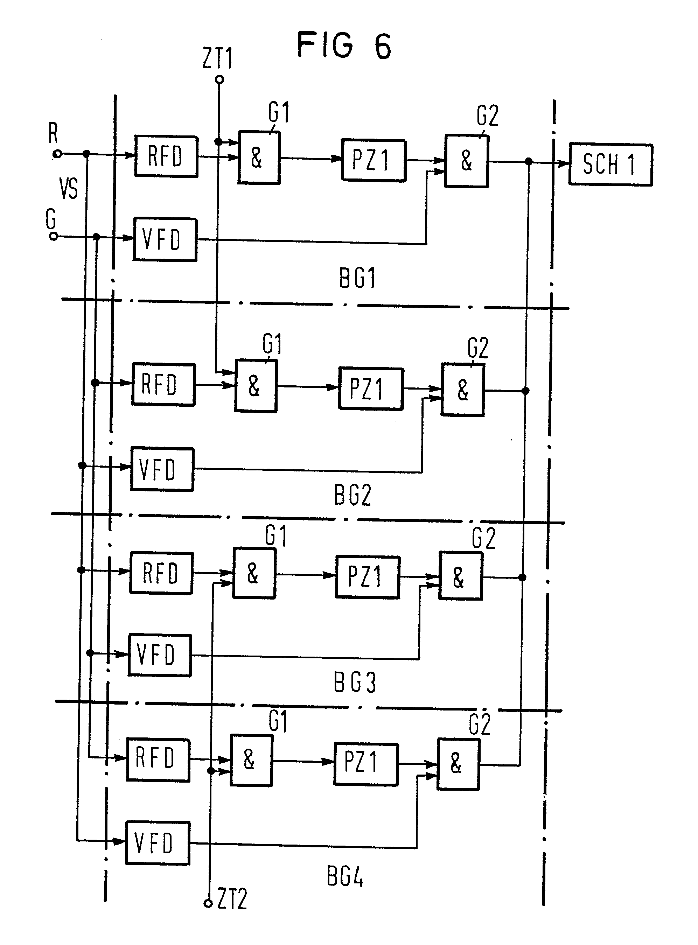

In Fig. 6 ist im Blockschaltbild eine Schaltungsanordnung mit vier gleichartigen Baugruppen dargestellt. Hier wurde bei den einzelnen Baugruppen der zusätzliche programmierte Zähler PZ2 weggelassen. Ansonsten sind die einzelnen Baugruppen so aufgebaut, wie in der Fig.5 gezeigt. Die Baugruppe 1 und die Baugruppe 2 sind hier mit dem Zähltakt ZT1 beaufschlagt, der aus der Teilung des Zeilentakts gewonnen wird, so daß die Baugruppen BG1 und BG2 zur Ermittlung des zeitlichen Abstands innerhalb der Zeile dienen. Die Baugruppen BG3 und BG4 werden mit einem zweiten Zähltakt ZT2 beaufschlagt, der dem Zeilentakt entspricht, so daß mit diesen beiden Baugruppen der vertikale Abstand zwischen zwei unterschiedlichen Farbsignalen ermittelt wird. Um den zeitlichen Abstand zwischen einem Farbwechsel, sowohl von rot nach grün als auch von grün nach rot jeweils mit dem Ende der einen Farbe und dem Beginn der anderen Farbe zu erfassen, sind sowohl für die Erfassung in der Horizontalen als auch in der Vertikalen jeweils zwei Baugruppen vorgesehen. Daher ist beispielsweise das Rotsignal in der ersten Baugruppe dem Rückflankendetektor und in der zweiten Baugruppe dem Vorderflankendetektor und umgekehrt zugeführt. Ebenso verhält es sich mit den dritten und vierten Baugruppen.

**Ansprüche**

1. Verfahren zum Schutz von Personen, die sich im Aktionsbereich eines beweglichen Maschinenteils einer verfahr- oder verschwenkbaren Arbeitsmaschine, insbesondere eines Industrieroboters, aufhalten, wobei bei Unterschreiten eines vorgegebenen Sicherheitsabstandes zwischen den beweglichen Maschinenteilen und der Person ein Warnsignal abgegeben wird und /oder die Arbeitsbewegung der Arbeitsmaschine unterbrochen wird, **dadurch gekennzeichnet,** daß entsprechend den programmierten Bewegungsabläufen der Arbeitsmaschine (AM) zumindest eine Farbfernsehkamera (FK) zur Beobachtung der Arbeitsmaschine (AM) und der Person (WP) angeordnet ist, daß das bewegliche Maschinenteil eine der Grundfarben (gn) der Farbfernsehkamera (FK) und wesentliche Teile der Arbeitskleidung der Person (WP) eine der beiden anderen Grundfarben (rt) der Farbfernsehkamera (FK) aufweisen, daß zur Auswertung der Videofarbsignale (VS) das Fernsehbild (FB) mit koordinatenförmig (KR) angeordneten Rasterfeldern (RF) unterlegt bzw. in solche gegliedert ist und jeweils der Abstand ($\Delta$ x;$\Delta$ y) zwischen den Rasterfeldern (RF) unterschiedlicher Videofarbsignale (R;G) ermittelt (DBA) wird, und daß bei Unterschreitung eines vorgegebenen Rasterfeldstandes ($\Delta$ x;$\Delta$ y) ein Steuersignal (STS) zur Erzeugung des Warnsignals oder zur Abschaltung der Arbeitsmaschine abgegeben wird.

2. Verfahren nach Anspruch 1, **dadurch gekennzeichnet,** daß die Rasterfelder (RF) von dem normalen Fernsehraster gebildet werden, wobei der räumliche Rasterfeldabstand ($\Delta$ x; $\Delta$ y) aus dem zeitlichen Abstand zwischen zwei unterschiedlichen Videofarbsignalen (R;G) ermittelt wird.

3. Verfahren nach Anspruch 2, **dadurch gekennzeichnet,** daß zur Bildung des horizontalen Rasterfeldstandes ($\Delta$ x) innerhalb jeder Fernsehbild-Zeile die Zeit zwischen zwei unterschiedlichen Videofarbsignalen (R; G) ermittelt wird, wobei bei Unterschreitung einer vorgegebenen Zeitspanne das Steuersignal (STS) abgegeben wird, und daß zur Bildung des vertikalen Rasterfeldabstandes ($\Delta$ y) die Anzahl der Fernsehbild-Zeilen zwischen zwei unterschiedlichen Videofarbsignalen (R; G) ermittelt wird, wobei bei Unterschreitung einer vorgebbaren Anzahl das Steuersignal (STS) abgegeben wird.

4. Verfahren nach Anspruch 2 oder 3, **dadurch gekennzeichnet,** daß der zeitliche Abstand zwischen zwei unterschiedlichen Videofarbsignalen mit einem vorwählbaren Zähler ermittelt wird, der mit einem von der Zeilenfrequenz abgeleiteten Zeittakt beaufschlagt ist und mit dem Ende eines Videofarbsignals gestartet wird, und daß mit dem Beginn des anderen Videofarbsignals vor Erreichen des vorgewählten Zählerstandes eine Steuereinrichtung angesteuert wird.

5. Verfahren nach Anspruch 1 **dadurch gekennzeichnet,** daß zusätzlich zur Videoüberwachung mit einer zeitlichen Vorgabe vor jeder Bewegung eines beweglichen Maschinenteils ein akustisches Warnsignal abgegeben wird, sofern sich im Aktionsbereich der Arbeitsmaschine eine Person befindet, wobei die Tonhöhe und Art des akustischen Warnsignals je nach Bewegungsrichtung des Maschinenteils verschieden sind.

6. Verfahren nach einem der vorhergehenden Ansprüche, **dadurch gekennzeichnet,** daß die Videosignale erst bei Überschreiten eines vorgegebenen Schwellenwertes ausgewertet werden.

7. Verfahren nach einem der vorhergehenden Ansprüche, **dadurch gekennzeichnet,** daß im Erfassungsbereich der Farbfernsehkamera (FK), jedoch nicht im Bewegungsbereich der Arbeitsmaschine (AM), eine Farbmarkierung (FM) in der Farbe (rt) der Arbeitskleidung zur Bildung eines Videotestsignals (R) für eine ständige Kamerafunktionsprüfung angeordnet ist, wobei bei einem Kameradefekt eine Störungsmeldung abgegeben wird.

8. Verfahren nach einem der vorhergehenden Ansprüche, **dadurch gekennzeichnet,** daß die Videosignale (VS) zusätzlich an eine Leitzentrale (LZ) übertragen werden.

9. Verfahren nach einem der vorhergehenden Ansprüche, **dadurch gekennzeichnet,** daß das Steuersignal (STS) nur abgegeben wird, wenn eine außerhalb des Aktionsbereichs der Arbeitsmaschine (AM) angeordnete Sicherheitsschranke (AS) durchschritten wurde und wenn die Arbeitsmaschine (AM) in Betriebsstellung geschaltet ist.

10. Einrichtung zur Durchführung des Verfahrens nach Anspruch 1, **dadurch gekennzeichnet,** daß der Farbfernsehkamera (FK) eine Vorrichtung nachgeschaltet ist, die das Fernsehbild (FB) in Rasterfelder (RF) gliedert, daß eine Differenzbildungs- und Auswerteeinrichtung (DBA) sowohl die horizontalen als auch die vertikalen Rasterfeldabstände ($\Delta$ x, $\Delta$ y) ermittelt, und daß der Differenzbildungs- und Auswerteeinrichtung (DBA) eine Steuerlogik (SLO) nachgeschaltet ist, die einen Maschinenservo (MS) der Arbeitsmaschine (AM) beaufschlagt.

11. Einrichtung zur Durchführung des Verfahrens nach einem der Ansprüche 2 bis 4, **dadurch gekennzeichnet,** daß der Farbfernsehkamera (FK) eine Videofarbsignalauswertevorrichtung nachgeschaltet ist, die vier gleichartige Baugruppen (BG1 bis BG4) mit jeweils einem Rückflankendetektor (RFD) für ein Videofarbsignal (R), einem Vorderflankendetektor (VFD) für das andere Videofarbsignal (G), einen über ein erstes logisches Verknüpfungsglied (G1) dem Rückflankendetektor (RFD) vorgeschalteten programmierbaren Zähler (PZ1) aufweist, dem über ein zweites logisches Verknüpfungsglied (G2), das vom Zähltakt (ZT1 bzw. ZT2) beaufschlagt ist, eine Schaltstufe (SCH1) nachgeschaltet ist, wobei zur Ermittlung des zeitlichen Abstandes in der Horizontalen zwei Baugruppen (BG1 und BG2) mit einem ersten Zählertakt (ZT1) beaufschlagt sind, der durch Teilung des Zeilentakts gebildet ist, und wobei zur Ermittlung des zeitlichen Abstandes in der Vertikalen die dritte und vierte Baugruppe (BG3 und BG4) mit einem zweiten Zähltakt (ZT2) beaufschlagt sind, der dem Zeilentakt entspricht, und wobei ferner in der zweiten und vierten Baugruppen (BG2, BG4) das zweite Videofarbsignal (G) auf den Rückflankendetektor (RFD) und das erste Videofarbsignal (R) auf den Vorderflankendetektor (VFD) geführt sind.

12. Einrichtung nach Anspruch 11, **dadurch gekennzeichnet,** daß in jeder Baugruppe (BG1 bis BG4) dem programmierbaren Zähler (PZ1) ein weiterer programmierbarer Zähler (PZ2) mit einem nachgeschalteten weiteren logischen Verknüpfungsglied (G3) parallelgeschaltet ist, und daß dem weiteren logischen Verknüpfungsglied (G3) eine weitere Schaltstufe (SCH2) nachgeschaltet ist, wobei der weitere programmierbare Zähler (PZ2) auf einen niedrigeren Zähltakt als der erste programmierbare Zähler (PZ1) eingestellt ist und die erste Schaltstufe (SCH1) die Abgabe eines Warnsignals und die zweite Schaltstufe (SCH2) die Abschaltung der Arbeitsmaschine (AN) bewirkt.

# FIG 1

AG

FM
(rt)

AS AG

AM

(rt)
WP

AS

(gn)

# FIG 2

STP 1 ──→ SLO ──→ MS

T1

T G

S

T2=T1- n sec ──→ STP 2 ──→ AA

OA

# FIG 3

0 179 252

## FIG 4

## FIG 5

# FIG 6